# EUROPÄISCHE PATENTANMELDUNG

(11) **EP 2 850 980 A1**
(43) Veröffentlichungstag der Anmeldung: **25.03.2015**
(21) Anmeldenummer: 13185359.0
(22) Anmeldetag: 20.09.2013
(51) Int. Cl.: A47J 31/06, A47J 31/36

(54) **Perforationsvorrichtung für Extraktionsgerät zum Herstellen von Brühprodukten**

(71) Anmelder: Luna Technology Systems LTS GmbH, 8304 Wallisellen (CH)
(72) Erfinder: Rubin, Andres, 8608 Bubikon (CH); Zwicker, Dominic, 9650 Nesslau (CH); Brändle, Bruno, 9642 Ebnat-Kappel (CH)
(74) Vertreter: Frei Patent Attorneys

(57) **Zusammenfassung**

Die Perforationsvorrichtung (1) weist mindestens einen Perforationsdorn (3) auf, der sich von einer Basis weg verjüngend ausgebildet ist, wobei der Perforationsdorn eine Mantelfläche (11, 12) definiert und mindestens eine von der Mantelfläche (11, 12) nach aussen vorstehende, axiale Rippe (20) aufweist. Die Rippe (20) ist nichtschneidend und der Perforationsdorn (3) insbesondere so ausgebildet, dass die Kapselwand aufgrund eines im Innern der Kapsel beim Einleiten der Brühflüssigkeit aufgebauten hydrostatischen Drucks flächig gegen einen Bereich der Mantelfläche (11, 12) gedrückt wird, wobei aufgrund einer verbleibenden Steifigkeit der Kapselwand beidseitig der Rippe (20) Kanäle entstehen, durch welche das Extraktionsprodukt fliessen kann.

## Beschreibung

Die Erfindung betrifft die Zubereitung von Brühgetränken oder anderen Brühprodukten. Sie betrifft insbesondere Extraktionsgeräte zum Zubereiten von Brühgetränken oder dergleichen aus einem in einer Kapsel enthaltenen Extraktionsgut, beispielsweise gemahlenem Kaffee. Sie betrifft insbesondere eine Perforationsvorrichtung für Extraktionsgeräte zum Herstellen von Brühprodukten, beispielsweise Kapsel-Kaffeemaschinen. Weiter betrifft sie ein Brühmodul für ein solches Extraktionsgerät sowie ein Extraktionsgerät.

Extraktionsgeräte zum Zubereiten von Getränken oder dergleichen aus einem in einer Portionsverpackung vorhandenen Extraktionsgut sind beispielsweise als Kaffee- oder Espressomaschinen bekannt. In vielen entsprechenden Systemen sind die Portionsverpackungen als Kapseln ausgebildet, in denen das Extraktionsgut bspw. luftdicht abgeschlossen ist. Für die Extraktion wird die Kapsel an zwei einander gegenüberliegenden Seiten angestochen. Auf der ersten Seite wird eine Extraktionsflüssigkeit - im Allgemeinen heisses Wasser - eingeleitet. Auf der zweiten Seite wird das Extraktionsprodukt aus der Kapsel ausgeleitet. Je nach zuzubereitendem Getränk und System kann dabei im Innern der Kapsel ein erheblicher Druck von beispielsweise 5-20 bar herrschen.

Einerseits sind Kapselsysteme bekannt geworden, bei denen Wasser auf einer Injektionsseite in die Kapsel eingeleitet wird, während die Kapsel auf der Extraktionsseite zunächst unversehrt ist. Unter dem Druck des eingeleiteten Wassers wird die extraktionsseitige Begrenzung der Kapsel gegen eine beispielsweise gerippte Struktur gedrückt und dabei so gespannt, dass sie reisst und das Extraktionsprodukt aus der Kapsel abfliessen kann. Ein solches System kann nur mit einem Material funktionieren, dass nur sehr wenig plastisch dehnbar ist und eine Reissspammng aufweist, die erreicht wird, wenn das Material durch den Kapselinnendruck gegen eine Rippe oder dergleichen gedrückt wird. Als solches Material ist bisher nur Aluminium verwendbar. Beispiele für solche Systeme findet man in der EP 0 521 188 und der US 5,897,899.

Andererseits gibt es Brühsysteme, bei denen die Kapsel auch extraktionsseitig durch einen Perforationsdorn (Extraktionsdorn) aufgestochen wird, beispielsweise schon durch das Positionieren in der Brühkammer und vor dem Einsetzen des Brühprozesses. Bei solchen Systemen wird das Extraktionsprodukt durch den Extraktionsdorn geleitet; der Kaffeesatz bleibt in der Kapsel zurück. Die Kapselwandung solcher Systeme kann aus Kunststoff - bspw. Polypropylen mit einer sauerstoffdichten Sperrschicht versehen - sein, wobei dann aufgrund der sehr grossen Reissdehnung solcher Stoffe die Perforationsdorne sehr scharf sein müssen. Das Anstechen von solchen Kunststoffkapseln ist nicht trivial. Ausserdem darf der Kanal, durch welchen das Extraktionsprodukt durch den Extraktionsdorn abfliesst, nur einen sehr kleinen Durchmesser aufweisen

Die WO 2008/023057 zeigt ein entsprechendes Mittel zum Penetrieren einer Portionsverpackung mit Perforationsspitzen, die je eine zur Perforationsrichtung geneigte Fläche mit Öffnungen in einer Lochsieb-Struktur aufweisen. Durch dieses Mittel sollen verbesserte Durchleiteigenschaften erreicht werden. Unter den in der WO 2008/023057 gezeigten Perforationselementen sind Perforationselemente mit kammartigen Klingenelementen, welche zum erstmaligen Durchschneiden der Kapselhülle während des Perforationsvorgangs dienen. Nachteilig ist jedoch das recht aufwändige Herstellungsverfahren.

Die WO 2010/118544 zeigt unter anderem extraktionsseitige Perforationselemente, welche die Form eines von der Auflagefläche ungefähr senkrecht abstehenden Blechs aufweisen, wobei das Blech gekrümmt ist, oder aus mehreren in einem Winkel zueinander stehenden Blechstücken zusammengesetzt ist. Ergänzend zu den Perforationselementen ist in der Auflagefläche ein Siebelement vorhanden. Weiter sind Rückhaltestege vorhanden, die im Innern der Perforationselemente, d.h. im Innern der von den Perforationselementen aufgespannten Fläche angeordnet sind. Allerdings muss bei dieser Lösung das Siebelement von Zeit zu Zeit gespült werden, damit nicht längerfristig Kaffeesatz anlagert.

Es ist eine Aufgabe der vorliegenden Erfindung, eine Perforationsvorrichtung, insbesondere eine Extraktionsvorrichtung, zu schaffen, welche Nachteile des Standes der Technik überwindet.

Die Perforationsvorrichtung weist mindestens einen Perforationsdorn auf, der sich von einer Basis weg verjüngend ausgebildet ist, wobei der Perforationsdorn eine Mantelfläche definiert und mindestens eine von der Mantelfläche nach aussen vorstehende, axiale Rippe aufweist.

Die Rippe ist nicht-schneidend und der Perforationsdorn insbesondere so ausgebildet, dass die Kapselwand aufgrund eines im Innern der Kapsel beim Einleiten der Brühflüssigkeit aufgebauten hydrostatischen Drucks flächig gegen einen Bereich der Mantelfläche gedrückt wird, wobei aufgrund einer verbleibenden Steifigkeit der Kapselwand beidseitig der Rippe Kanäle entstehen, durch welche das Extraktionsprodukt fliessen kann.

Insbesondere kann die Perforationsvorrichtung eine Extraktionsvorrichtung sein, d.h. der Perforationsdorn ist ein Extraktionsdorn, und die durch die Durchleitöffnung(en) geleitete Extraktionsflüssigkeit ist das von der Brühkammer weg zu einem Ausgiesser geleitete Extraktionsprodukt.

Die Perforationsvorrichtung kann weiter ein Basiselement aufweisen, von welchem weg der mindestens eine Perforationsdorn ragt; im assemblierten Zustand in ein Brühkammer-Inneres hinein. Ein solches Basiselement kann bspw. als Basisplatte ausgebildet sein. Alternativ kann es auch durch ein Gehäuse des Extraktionsteils des Brühmoduls gebildet werden. Weiter kann mindestens eine Durchleitöffnung für das Extraktionsprodukt von einer Vorderseite des Basiselements (zum Brühkammerinnern hin orientiert) zu einer Rückseite ausgebildet sein. Durch diese Durchleitöffnung(en) kann das Extraktionsprodukt aus der Brühkammer abfliessen bzw. die Brühflüssigkeit in diese hineinfliessen. Eine solche Durchleitöffnung kann eine Durchgangsbohrung im Basiselement sein, oder aber auch in einem Einsatz - bspw. Perforationsdorn-Sockel - oder zwischen einem solchen und dem Basiselement ausgebildet sein.

Ein solches Basiselement, insbesondere Basisplatte, kann eine Anlage für die Kapselwand (Kapselhülle) definieren, welche dann auch die Basis des Perforationsdorns definiert. Die Perforationsvorrichtung kann so ausgebildet und mit anderen Elementen des Extraktionsgeräts abgestimmt sein, dass während des Extraktionsprozesses die Kapselwand gegen das Basiselement gedrückt wird. In diesem Fall wird die mindestens eine Durchleitöffnung im Bereich der axialen Rippe angeordnet sein, d.h. insbesondere einer der Stellen, an welcher die Wand der angestochenen Kapsel durch die Rippe vom Perforationsdorn ferngehalten wird.

In alternativen Konfigurationen kann auch vorgesehen sein, dass die Kapselwand während des Perforationsprozesses nicht am Basiselement anliegt. Dann wird also zwischen der Kapselwand und dem Basiselement ein Volumen bleiben, in welches hinein die Extraktionsflüssigkeit gelangt und von welchem aus sie durch die Durchleitöffnung(en) hindurch abfliesst. Dann ist nicht zwingend, dass die mindestens eine Durchleitöffnung im Bereich der Rippe angeordnet ist.

Eine Rippe im Sinne des vorliegenden Texts ist von einer Klinge verschieden, d.h. sie ist nicht-schneidend, weist keine Schneidkante auf und ist also für ein Kunststoffmaterial stumpf. Die erwähnte und nachstehend noch eingehender erläuterte Funktion der Rippe ist, dass die Kapselwand auf ihr aufliegt und sich aufgrund dessen neben der Rippe Kanäle bilden.

Der Umstand, dass die Rippe "axial" ist, bedeutet nicht notwendigerweise, dass sie vollständig parallel zur Achse des Perforationsdorns ist. Sie kann auch leicht schräg, mit einem Winkel von bspw. höchstens 45° zu einem axialen Verlauf entlang der Mantelfläche stehen, in welchem Fall sie insbesondere leicht helikal angeordnet sein kann.

Der Perforationsdorn weist einen Grundkörper auf, welcher bspw. im Wesentlichen kegel- oder pyramidenförmig (mit einer wählbaren Anzahl von zur Mantelfläche gehörenden Pyramiden-Seitenflächen) oder anderswie sich verjüngend ausgebildet ist. Im Falle einer Pyramidenform kann die Pyramide regelmässig oder unregelmässig und gerade oder schief sein. Eine Kegelform kann ein gerader oder schiefer Kreiskegel oder ein gerader oder schiefer Ellipsenkegel sein.

Abweichend von einer reinen Kegel- oder Pyramidenform kann ein im Wesentlichen kegel- oder pyramidenförmiger Perforationsdorn auch in seiner Grundfläche begrenzt sein, so dass die Mantelfläche an der Basis zylindrische Teilflächen aufweist.

Nach dem Anstechvorgang, und insbesondere unter einem im Innern der Kapsel aufgebauten Innendruck liegt die Kapselwand bereichsweise flächig am Grundkörper an. Die Rippe bewirkt eine zusätzliche Eindellung in die Kapsel. Angrenzend an die Rippe wird die Kapselwand durch diese lokal vom Grundkörper ferngehalten, so dass ein Durchflusskanal - bzw. im Allgemeinen beidseitig der Rippe je ein Durchflusskanal -entsteht.

Ein solcher Durchflusskanal hat eine Reihe von vorteilhaften Eigenschaften/Wirkungen.
- Siebwirkung: Aufgrund des Innendrucks in der Kapsel wird die Kapselwand eng an den Grundkörper angedrückt, und der Durchflusskanal wird entsprechend eng sein. Das hält das Extraktionsgut (bspw. Kaffeepulver) wirksam zurück.
- Schäumwirkung: Wenn die heisse Brühflüssigkeit unter Druck in einen engen Kanal geleitet wird, ergibt sich eine Schäumwirkung. Die Bildung eines Schaums ist bei vielen Brühprodukten, insbesondere Kaffee, sehr erwünscht.
- Automatische Anpassung: Beim Brühen von Kaffee aus Portionenkapseln wird unterschieden zwischen Espresso einerseits und "Caffè Lungo"/ "Caffè crema" andererseits. Espresso wird mit fein gemahlenem Kaffee zubereitet, unter hohem Druck, und mit vergleichsweise wenig Flüssigkeit gebrüht. Für die Zubereitung von Caffè Lungo werden gröber gemahlener Kaffee und mehr Wasser verwendet, und der Brühdruck ist kleiner. Das erfindungsgemässe Vorgehen bringt es mit sich, dass sich durch Anpassung des Parameters "Brühdruck" die Durchleitkanäle automatisch anpassen. Bei geringerem Brühdruck werden sie grösser und ermöglichen die Durchleitung von mehr Flüssigkeit. Bei höherem Brühdruck (Zubereitung von Espresso) wird die Kapselwand hingegen mehr an die Extraktionsdorn-Oberfläche gedrückt, und so werden die Durchleitkanäle kleiner, halten auch fein gemahlenen Kaffee effizient zurück und sorgen für eine besonders ausgeprägte Schaumbildung. Dies lässt sich auch auf weitere Varianten wie den sogenannten amerikanischen Kaffee, der mit besonders wenig Druck gebraut wird, erweitern.

Diese hier diskutierte Wirkung ist darauf zurückzuführen, dass die Kapselwand neben der Rippe bzw. zwischen den Rippen am Grundkörper anliegt. Das ist primär dann der Fall, wenn der Abstand zwischen benachbarten Rippen (sofern mehr als eine Rippe vorhanden ist) deutlich grösser ist als deren Höhe h. Die Rippenhöhe h ist das Mass dafür, wie weit die Rippe vom Grundkörper absteht. Sie ist definiert als die Ausdehnung senkrecht zur Mantelfläche. Der Abstand der Rippen wird in Umfangrichtung gemessen d.h. entlang der Mantelfäche in einer Ebene senkrecht zur Rippenachse. Für einen Abstand a der Rippen voneinander (gemessen am Ansatz, d.h. an die Grundplatte anschliessend und dem Umfang entlang) ergibt sich bspw. die Regel, dass dieser mindestens das doppelte, bevorzugt mindestens das Dreifache von deren Höhe beträgt. In einer bevorzugten Ausführungsform gilt diese Regel auch für den Abstand/die Rippenhöhe in der Hälfte der Perforationsdorn-Höhe h_{d} gemessen und/oder in der Hälfte der axialen Ausdehnung der Rippen gemessen.

Der Perforationsdorn, insbesondere Extraktionsdorn ist bspw. so ausgebildet, dass er sich zum Perforieren einer filterfreien Kapsel mit einer Kapselwand aus Polypropylen mit einer Wandstärke von ungefähr 0.3 mm eignet.

Nachstehend werden Ausführungsformen der Erfindung anhand eines Perforationsdorns mit mehreren Rippen diskutiert; die Diskussion lässt sich jedoch auch auf Perforationsdorne mit einer einzigen Rippe anwenden.

Der Grundkörper, d.h. das von der Mantelfläche umschlossene Volumen ist dreidimensionsional-körperhaft, d.h. verschieden von einer nadelartigen oder zweidimensional-flächigen Form. Die Rippe sitzen auf dem Grundkörper auf und stehen dabei mindestens teilweise von Bereichen der Mantelfläche ab, die schräg sind, d.h. in einem (nicht-rechten) Winkel zur Basisplatte stehen, so, dass die Mantelfläche von der Auflageebene weg geneigt ist und Flächennormale auf die Mantelfläche am Ort der Rippe(n) von der Auflageebene weg weist. Sofern mehrere Rippen vorhanden sind, laufen sie daher in Richtung zur Spitze hin aufeinander zu.

Der Grundkörper kann insbesondere im Wesentlichen konvex sein. Sofern er nicht vollständig konvex ist, sondern die Mantelfläche leicht konkave Bereiche aufweist, stehen die Rippen so weit vor, dass sie über die sogenannte konvexe Hülle hinausragen oder mindestens an diese stossen.

Am Grundkörper kann die Mantelfläche in der Nähe der Anlagefläche nebst den bspw. zur Spitze hin zulaufenden Flächenabschnitten (bspw. kegelartigen Grundform) auch zylinderflächenartig verlaufende Flächenabschnitte vorhanden sein. Durch diese kann bspw. die vom Perforationsdorn eingenommene Grundfläche beschränkt werden ohne dass die Funktionalität beeinträchtigt würde, was kompaktere Anordnungen von Perforationsdornen ermöglicht.

Die Anzahl der Rippen kann insbesondere zwischen 2 und 8 oder zwischen 2 und 6 betragen, und bspw. 3 oder 4 sein. Im Falle eines pyramidenförmigen Grundkörpers kann bspw. pro Pyramidenfläche genau eine Rippe vorhanden sein.

Die Rippen sind bspw. im Querschnitt rechteckig, aber auch andere Formen sind möglich.

Die Höhe der Rippen - d.h. die Ausdehnung senkrecht zur Mantelfläche, d.h. in ungefähr radialer Richtung - beträgt bspw. zwischen 0.3 und 1 mm.

Die Breite der Rippen - die Ausdehnung in Umfangsrichtung des Perforationsdorns - beträgt bspw. zwischen 0.4 mm und 1.2 mm, insbesondere zwischen 0.4 mm und 0.9 mm.

Ausserdem kann vorgesehen sein, dass die Rippen sich nicht bis zur Spitze des Perforationsdorns erstreckt/erstrecken sondern in einem axialen Abstand von dieser endet, entweder abrupt oder auslaufend. Sie verlaufen bevorzugt axial bis zur Anlagefläche

Die Durchleitöffnungen - bevorzugt ist eine Mehrzahl von Durchleitöffnungen vorhanden - können unmittelbar angrenzend an die Rippen angeordnet (bzw., sofern die Rippen nicht bis zur Basisplatte reichen, an deren Projektion auf die Ebene der Basisplatte) sein. Die Durchleitöffnungen erstrecken sich dann vom Grundkörper nach radial-aussen und/oder der Grundkörper ist am Ort der Durchleitöffnungen mit Ausnehmungen versehen. Sofern keine - durch ein Basiselement gebildete - Anlagefläche vorhanden ist, an welcher während des Brühvorgangs die Kapselwand anliegt, kann die Durchleitöffnung bzw. können die Durchleitöffnungen auch in einem Abstand zu der Rippe angeordnet sein.

Die Anzahl der Perforationsdorne (insbesondere Extraktionsdorne) der Perforationsvorrichtung kann entsprechend den Bedürfnissen gewählt werden. In einer ersten Ausführungsform ist ein Perforationsdorn, bspw. in der Mitte der Basisplatte, vorhanden. Alternativ können zwei, drei, vier, fünf oder mehr Perforationsdorne vorhanden sein; die Verteilung kann symmetrisch (bspw. mit gleichmässig über dem Umfang verteilten Dornen und/oder einem Dorn in der Mitte) oder auch nicht-symmetrisch sein.

Gegenstand der Erfindung sind auch ein Brühmodul mit einer Vorrichtung der beschriebenen Art sowie ein Extraktionsgerät, bspw. Kaffeemaschine, mit einem solchen Brühmodul.

Nachfolgend werden Ausführungsbeispiele der Erfindung anhand von schematischen Zeichnungen im Detail beschrieben. In den Figuren bezeichnen gleiche Bezugszeichen gleiche oder analoge Elemente. Es zeigen:
- Fig. 1 eine Ansicht einer Perforationsvorrichtung;
- Fig. 2 eine Draufsicht auf die Perforationsvorrichtung gemäss Fig. 1;
- Fig. 3 die entlang der Ebene III-III in Fig. 2 geschnitten dargestellte Perforationsvorrichtung der Figuren 1 und 2;
- Fig. 4 eine schematische Schnittdarstellung einer Rippe mit einer daran anliegenden Kapselwand;
- Fig. 5a, 5b je zwei Ansichten eines alternative Extraktionsdorns auf einem Sockel;
- Fig. 6a und 6b zwei Ansichten eines weiteren Extraktionsdorns auf einem Sockel;
- Fig. 7a und 7b eine Ansicht noch eines Extraktionsdorns und eine Darstellung dieses Extraktionsdorns und Sockels entlang der Ebene B-B in Fig. 7a geschnitten dargestellt;
- Fig. 8a und 8b eine Ansicht noch eines weiteren Extraktionsdorns und Sockels sowie eine Darstellung dieses Extraktionsdorns entlang der Ebene B-B in Fig. 8a geschnitten dargestellt;
- Fig. 9a und 9b eine Ansicht eines Extraktionsdorns auf einem Sockel und eine Darstellung dieses Extraktionsdorns entlang der Ebene B-B in Fig. 9a geschnitten dargestellt;
- Fig. 10a und 10b zwei Ansichten eines weiteren Extraktionsdorns auf einem Sockel;
- Fig. 11-16 Schnittdarstellungen von Formen von Rippen für Extraktionsdome;
- Fig. 17a-17d eine Ansicht noch eines Extraktionsdorns auf einem Sockel, eine Draufsicht auf diesen Extraktionsdorn, eine Seitenansicht dieses Extraktionsdorns und Sockels sowie eine Darstellung entlang der Ebene D-D in Fig. 7c geschnitten; und
- Fig. 18a und 18b eine Ansicht und eine Schnittdarstellung noch eines Extraktionsdorns auf einem Sockel.

Die Perforationsvorrichtung der nachstehend beschriebenen Ausführungsformen weist die geeigneten Dimensionen und Eigenschaften auf, um eine Kapsel gemäss WO 2010/118543 extraktionsseitig zu perforieren. Auf diese Schrift und die darin enthaltenen Beschreibung der Eigenschaften von Portionskapseln, insbesondere deren Form, Dimension, Materialbeschaffenheit und Kapselwanddicke, wird hier explizit Bezug genommen.

Die Perforationsvorrichtung eignet sich bspw. für einen Einbau in ein Brühmodul gemäss WO 2013/110206.

Die vorliegende Erfindung ist jedoch weder auf die Anwendung für Kapseln gemäss WO 2010/118543 noch auf die Verwendung in einem Brühmodul gemäss

WO 2013/110206 beschränkt. Vielmehr lässt sie sich auch für andere Kapseldimensionen (durch eine Anpassung der Abmessungen der Basisplatte und optional der Extraktionsdornen), andere Kapselformen (durch eine Anpassung der Form der Basisplatte und eventuell Anordnung der Extraktionsdornen), und auch andere Kapselwandbeschaffenheiten (ohne spezifische Modifikationen oder durch eine geeignet angepasste Wahl der Materialien der Extraktionsdornen und der Eigenschaften der Extraktionsdom-Spitze) anpassen. Im Allgemeinen eignet sich das hier beschriebene Vorgehen besonders für Kapseln mit Kunststoff-Wänden (die gewisse von Aluminium verschiedene Dehneigenschaften haben); darunter sind auch Kapseln aus biologisch abbaubaren Materialien. Als Brühmodul kann jedes geeignete Brühmodul verwendet werden, bei welchem eine darin eingelegte passende Kapsel beim Verschliessen des Brühmoduls oder spätestens beim Einleiten einer Brühflüssigkeit durch die beschriebenen Perforationsdorne angestochen wird.

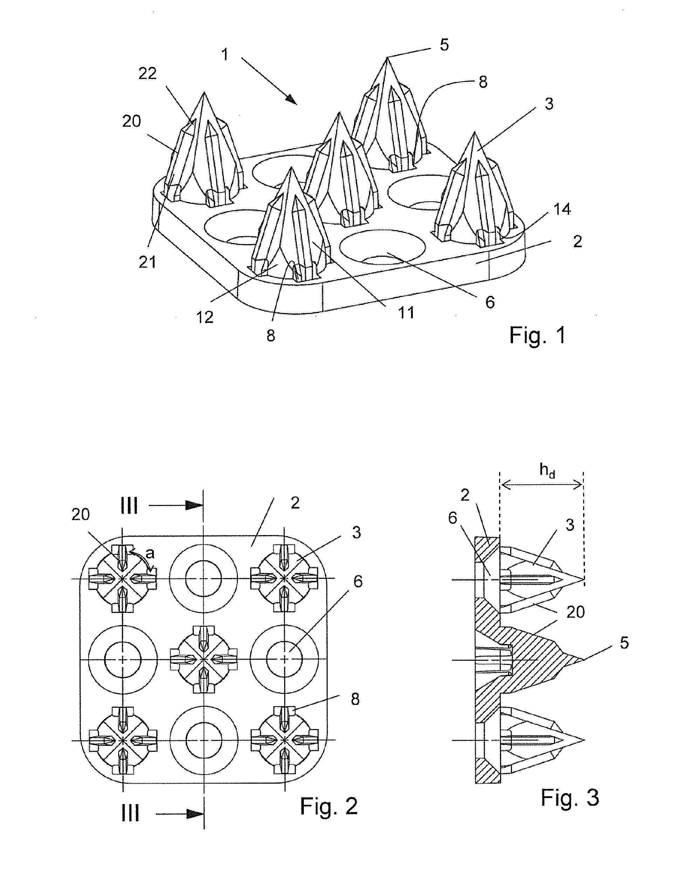

Die Perforationsvorrichtung 1 nach **Figuren 1-3** weist eine Basisplatte 2 und, von der Basisplatte vorstehende Extraktionsdornen 3 auf. Im Gebrauchszustand ragen die Extraktionsdornen von der Basisplatte her ins Innere einer Brühkammer und können so bei deren Verschliessen eine Portionskapsel anstechen. Im dargestellten Beispiel sind fünf Extraktionsdorne vorhanden, an jeder Ecke der Basisplatte sowie in der Mitte je einer, wobei auch andere Verteilungen von Extraktionsdornen möglich sind; insbesondere der mittlere Extraktionsdorn ist optional. Auch Anordnungen mit zwei, drei, sechs, etc. Extraktionsdornen sind möglich, und auch die Verwendung nur eines einzigen Extraktionsdorns - bspw. in der Mitte - ist nicht ausgeschlossen. Ebenfalls möglich sind Anordnungen mit verschiedenen und/oder verschieden dimensionierten Extraktionsdornen, bspw. einem kleineren oder grösseren Extraktionsdorn in der Mitte.

Jeder Extraktionsdorn weist einen Grundkörper in der Form einer auf eine Spitze 5 hin zulaufenden, vierseitigen Pyramide, wobei die Pyramide an deren Basis beschnitten und auf eine kreisförmige Grundfläche beschränkt ist, was man in Fig. 1 anhand der Zylinderflächen 12 sowie in Fig. 2 besonders gut sieht. Die Seitenflächen 11 und die Zylinderflächen 12 bilden zusammen die Mantelfläche des Grundkörpers.

Entlang jeder der Seitenflächen und ungefähr in deren Mitte erstreckt sich eine nach aussen vorstehende, axiale Rippe 20. Diese weist einen Bereich konstanten Querschnitts 21 sowie zur Spitze hin einen auslaufenden Bereich 22 aus. Die Rippe 20 erstreckt sich nicht bis zur Spitze 5 sondern endet unterhalb so dass die Mantelfläche zur Spitze hin einen rippenfreien Bereich ausbildet.

Beidseitig der Rippen ist in der Basisplatte je eine Durchleitöffnung 8 ausgebildet. Am Ort der Durchleitöffnungen ist der Grundkörper des Extraktionsdorns mit jeweils einer kleinen Ausnehmung 14 versehen, so dass die Durchleitöffnungen 8 sich leicht in die kreisförmige Grundfläche hinein erstrecken können, was bspw. in Fig. 2 sichtbar ist.

In Figuren 2 und 3 sind noch der Abstand a zwischen benachbarten Rippen bzw. die Höhe h_{d} eines Extraktionsdorns gemäss der vorstehend verwendeten Definition eingezeichnet. In Ausführungsformen, in welchen der Extraktionsdorn auf einem Sockel gefertigt wird, welcher in eine Aufnahme in einem Basiselement (bspw. Basisplatte) eingebracht wird, wird die Höhe h_{d} exklusive Sockel gemessen, d.h. von der Basis, insbesondere Anlagefläche (sofern vorhanden) weg.

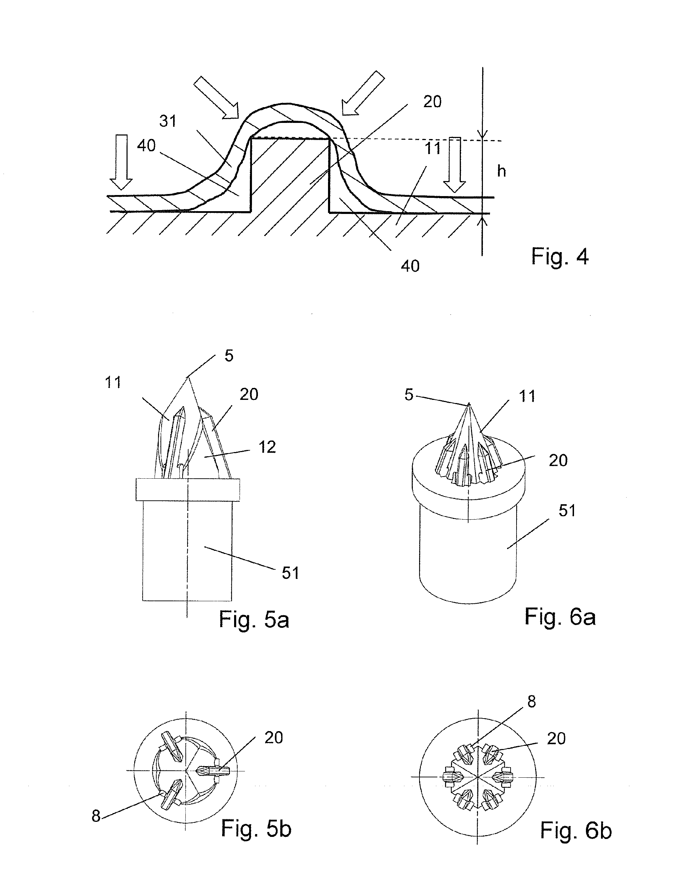

Die nachstehend beschriebene Figur 4 zeigt die entsprechende Definition der Rippenhöhe h.

Die Wirkungsweise der Rippen ist wie folgt: Wenn beim Verschliessen des Brühmoduls - dieses kann beispielsweise im Fall einer würfelförmigen Kapsel gemäss WO 2013/110206 ausgebildet sein - die Extraktionsdorne gegen die Kapsel gedrückt werden, wird diese durch die Spitzen 5 perforiert. Die Extraktionsdorne dringen ein Stück weit ins Kapselinnere ein. Anschliessend wird injektionsseitig heisses Wasser unter Druck in die Kapsel eingeleitet. Die diesem Zweck dienende injektionsseitige Perforations- und Injektionsvorrichtung kann bspw. gemäss dem Stand der Technik ausgebildet sein und wird hier nicht weiter beschrieben.

Aufgrund des im Kapselinnern herrschenden Drucks dehnt sich die Kapsel - die Kapselwand wird aufgrund der höheren Temperatur auch besser verformbar - leicht aus. Die Kapselwand wird weiter in Richtung der Basisplatte 2 und gleichzeitig am Ort der Extraktionsdorne gegen deren Mantelfläche gedrückt. Aufgrund der Rippen 20 bildet sich jedoch zwischen der Mantelfläche und den Rippen beidseitig je ein Kanal 40, was schematisch in **Figur 4** gezeigt ist. In Fig. 4 illustrieren die Doppelpfeile den hydrostatischen Druck, der sich im Innern der Kapsel aufbaut und die Kapselwand 31 flächig gegen den Extraktionsdorn drückt.

Die Kanäle 40 haben nun einerseits die Wirkung, dass sie das Wegfliessen des Extraktionsprodukts aus der Kapsel durch die Durchleitöffnungen ermöglichen. Andererseits haben die Kanäle 40 aufgrund ihrer beschränkten Ausdehnung an ihrem Ansatz (auf der Seite zur Spitze hin) auch eine Siebwirkung, so dass das Extraktionsgut in der Kapsel verbleibt und nicht mit dem Extraktionsprodukt zusammen abfliessen kann. Nimmt der Druck im Innern der Kapsel zu, werden die Kanäle automatisch kleiner, was einen selbstregulierenden Effekt hat (ein höherer Druck kann aufrecht erhalten werden) und die Siebwirkung wie vorstehend beschrieben bedarfsgerecht verfeinert.

Die Perforationsvorrichtung 1 weist in ihrer Basisplatte Befestigungslöcher 6 auf. Diese sind bspw. für eine Befestigung an einem Gerüst des Brühmoduls durch Senkkopfschrauben geeignet. Alternativ können solche Befestigungslöcher 6 oder ähnliche Befestigungsstrukturen auch zum Befestigen mit Heissverstemmen (über einen durch das Loch hindurch ragenden, mittels Wärme- oder Ultraschallzufuhr verformbaren Sporn) oder mit einem Schnappmechanismus verwendet werden. Anstatt wie gezeichnet vier Befestigungslöchern können auch weniger oder mehr Befestigungslöcher, bspw. zwei Befestigungslöcher, oder insbesondere wenn abweichend vom Gezeichneten kein zentraler Extraktionsdorn vorhanden ist, ein Befestigungsloch, vorhanden sein. Gemäss noch einer Alternative können andere Befestigungsstrukturen - bspw. seitlich an der Grundplatte - oder gar keine Befestigungsstrukturen (letzteres bspw. bei einer Befestigung durch Klemmen zwischen Strukturen des Gerüsts oder durch eine Klebeverbindung etc.) vorhanden sein. Eine zum vorstehend Diskutierten alternative Befestigungsart ist ein seitliches Einschnappen.

Die Perforationsvorrichtung 1 nach Figuren 1-3 ist einstückig und bspw. als Spritzgussteil aus einem geeigneten Kunststoff gefertigt. Mögliche Materialien sind Kunststoffe, bspw. PEEK oder Polyamide bspw. glasverstärkt (bspw. glasfaserverstärkt). Auch die Verwendung keramischer Werkstoffe ist möglich, bspw. von Al₂O₃ oder ZrO₂. Ebenfalls möglich sind metallische Werkstoffe, bspw. Druckgussteile auf Aluminiumbasis, Edelstahl etc.

Alternativ ist es auch möglich, die Extraktionsvorrichtung 1 aus mehreren Teilen aufzubauen. Zu diesem Zweck können bspw. die Extraktionsdornen als separate Bauteile gefertigt (bspw. durch Giessen oder Pressen) und dann an der Basisplatte befestigt werden.

Perforationsdorne der hier beschriebenen Art können auch injektionsseitig verwendet werden, wobei dann die Wirkung der Rippen nicht in jedem Fall und bei jedem Kapselmaterial zwingend ist. Alternativ können extraktionsseitig auch andere Perforationsmittel verwendet werden, bspw. Perforationsmittel gemäss WO 2010/118544.

Nachstehend werden weitere Beispiele von Formen für Extraktionsdorne diskutiert. Diese sind in den Figuren jeweils auf einem Sockel 51 angeordnet gezeichnet, mittels dem sie in entsprechenden Ausnehmungen der - separaten - Basisplatte befestigt werden können. Die Form der Spitze und die Ausführung (einstückig mit der Basisplatte/als separate Bauteile ggf. Art der Befestigung) hängen jedoch hier nicht zusammen, d.h. die Spitzenformen der nachfolgenden Figuren können auch für einstückige Ausführungen wie in Fig. 1-3 verwendet werden und umgekehrt.

Bei der Beschreibung der Formen der Extraktionsdorne werden nur die Unterschiede zur bereits beschriebenen Ausführungsform diskutiert; betreffend die Funktionsweise wird auf die vorstehende Beschreibung verwiesen.

Der in **Figuren 5a und 5b** gezeichnete Extraktionsdorn weist anstatt vier drei Seitenflächen 11 und eine entsprechenden Anzahl von Rippen 20 auf. Der Extraktionsdorn der **Figuren 6a und 6b** besitzt sechs Seitenflächen und Rippen. Die Zylinderflächen entfallen beim Extraktionsdorn gemäss Figuren 6a und 6b.

Entsprechende Extraktionsdorne mit fünf, sieben, acht, ... Seitenflächen und Rippen sind ebenfalls möglich. Auch möglich sind Dorne mit - im Gegensatz zu den bisher beschriebenen Extraktionsdornen - unregelmässig angeordneten und/oder ungleich grossen Seitenflächen (mit oder ohne Beschränkung auf kreisförmige Grundfläche mittels Zylinderflächen) sind möglich; ebenfalls variierbar ist der Neigungswinkel der Seitenflächen.

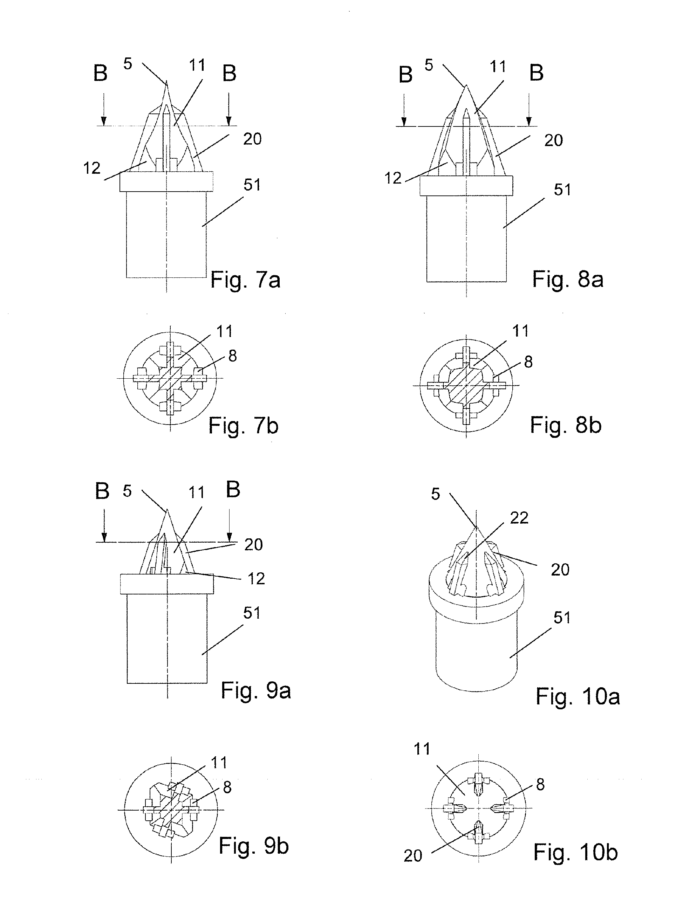

Bei der Ausführungsform gemäss **Figuren 7a und 7b** sind die Seitenflächen 11 konkav, und zwar sowohl in Bezug auf die axiale Richtung als auch in Bezug auf die Umfangsrichtung. Die Ausführungsform gemäss **Figur 8a und 8b** sieht hingegen konvexe Seitenflächen 11 vor.

Auch Formen, die nur in eine Richtung (bspw. nur in Umfangsrichtung) konkav bzw. konvex sind und kombinierte konvex-konkave Formen sind denkbar. Das Konzept der nicht-ebenen Seitenflächen lässt sich selbstverständlich auch auf eine andere Anzahl von Seitenflächen als vier anwenden.

Die Ausführungsform von **Figuren 9a und 9b** sieht wie die erste beschriebene Ausführungsform vier Seitenflächen 11 vor, die jedoch nicht rechtwinklig zueinander stehen, sondern eine rhombische Anordnung bilden. Entsprechende Formen mit ungleichen Winkeln zwischen den Seitenflächen sind auch für eine andere Anzahl Seitenflächen und/oder nicht-ebene Seitenflächen möglich.

**Figuren 10a und 10b** schliesslich zeigen einen kegelförmigen Extraktionsdorn, d.h. einen Extraktionsdorn mit einer im Querschnitt kreisförmigen, zur Spitze 5 hin zulaufenden Mantelfläche. Im gezeichneten Beispiel weist der Extraktionsdorn vier entlang der Umfangsrichtung regelmässig verteilte Rippen 20 auf; eine andere Anzahl von Rippen und/oder unregelmässige Verteilungen sind möglich.

Ein weiteres Merkmal der Ausführungsform gemäss **Figuren 10a und 10b****,** welches unabhängig von der Ausgestaltung der Mantelfläche implementierbar ist (also bspw. insbesondere auch bei den anderen in diesem Text beschriebenen ExtraktionsdornFormen), ist die auch abgesehen vom auslaufenden Bereich 22 nicht-konstante Querschnittfläche der Rippen. Im gezeigten Beispiel ist die Querschnittsfläche der Rippen 20 anschliessend an den auslaufenden Bereich maximal und nimmt dann zur Basisfläche hin wieder stetig ab. Andere Verläufe sind - beim Dorn gemäss Fig. 10a/10b oder bei anderem Extraktionsdornformen - ebenfalls möglich.

Nebst einem möglichen Verlauf der Querschnittsfläche kann auch die Form der Rippe(n) verschieden gewählt werden. Einige Beispiele sind in den nachfolgend beschriebenen Figuren gezeigt:

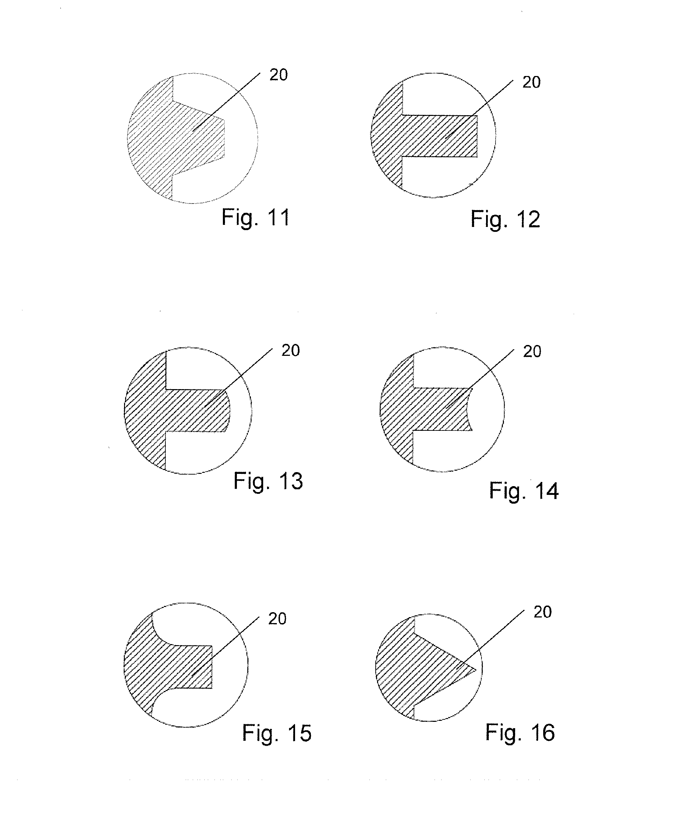

**Figur 11** zeigt eine Rippe 20 mit einem gegen radial-aussen zulaufenden, trapezförmigen Querschnitt.

**Figur 12** zeigt einen wie in den vorstehend beschriebenen Beispielen rechteckigen Querschnitt der Rippe 20, aber mit einem anderen Verhältnis zwischen Höhe (Ausdehnung in radialer Richtung) und Breite (Ausdehnung in Umfangsrichtung in Bezug auf die Extraktionsdorn- Mantelfläche). Konkret ist in Figur 12 die Höhe im Verhältnis zur Breite deutlich grösser gewählt als in den vorstehend beschriebenen Beispielen.

**Figur 13** zeigt eine Rippe 20 mit einem gegen aussen konvexen Abschluss, durch welchen ermöglicht wird, dass sich die Kapselwand radial-aussen besonders gut an die Rippe anschmiegt und so verhindert werden kann, dass entlang der Aussenkante ein weiterer Flüssigkeitskanal gebildet wird.

**Figur 14** zeigt im Gegensatz dazu einen konkaven Abschluss, bei welchem ein solcher weiterer Flüssigkeitskanal entlang der Rippenaussenkante gefördert wird.

**Figur 15** zeigt einen entlang der Rippenbasis gerundeten Verlauf. Die Ausgestaltung dieses Bereiches beeinflusst Form und Grösse der Flüssigkeitskanäle und kann so den Bedürfnissen angepasst werden. Bspw. können sichelförmige Kanäle besonders günstig für das Verhältnis zwischen Siebwirkung und Durchflusskapazität sein.

**Figur 16**, schliesslich, zeigt eine im Querschnitt dreiecksförmige Rippe 20.

In allen gezeigten Ausführungsformen können die dargestellten Aussen- und oder Innenkanten oder ein Teil davon in der Realität gerundet sein. Weiter können unabhängig von einer eventuellen Rundung die gezeichneten Winkel und Dimensionen variiert werden.

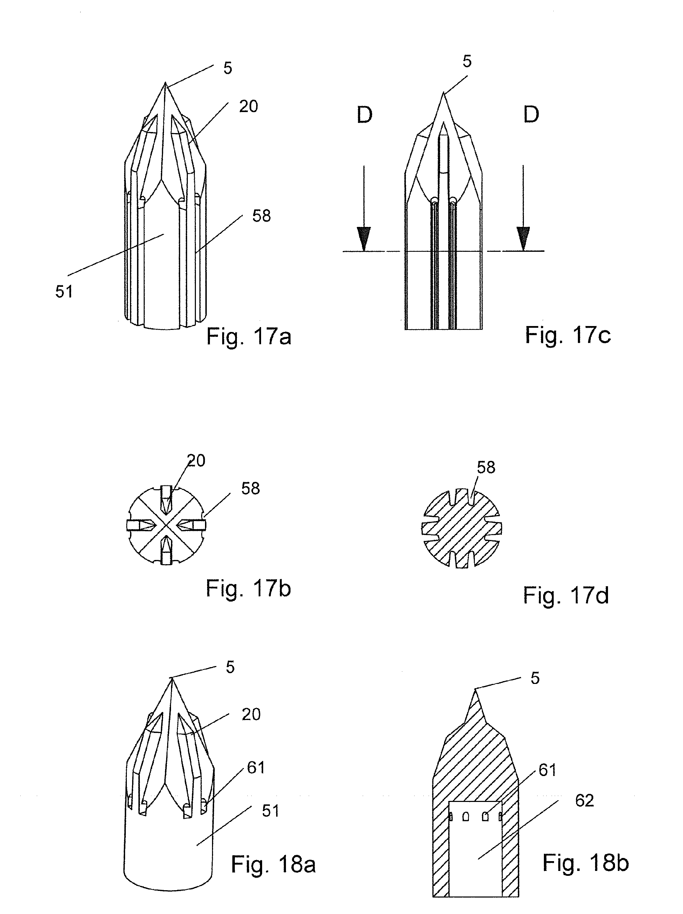

In Figuren **17a-17d** ist noch ein Extraktionsdorn auf einem Sockel 51 gezeichnet, welcher eine zu den Figuren 5-10 alternative Form aufweist. Erstens ist im Unterschied zu den Extraktionsdornen der Figuren 5-10 keine flanschartige Aufweitung oberseitig des Sockels vorhanden. Zweitens sind die Durchleitöffnungen nicht als Durchgangsbohrungen in der Basisplatte oder im Sockel des Extraktionsdorns vorhanden, sondern werden zwischen dem Sockel und der entsprechenden Innenwand der Ausnehmung in der Basisplatte gebildet, indem der Sockel nutartige Vertiefungen 58 aufweist, welche Kanäle bilden.

Diese beiden Unterschiede sind unabhängig voneinander realisierbar, wobei eine eventuelle in Kombination mit den nutartigen Vertiefungen vorhandene Aufweitung entsprechende Durchgangslöcher aufwiese.

**Figuren 18a und 18b** zeigen eine weitere Ausführungsform. In dieser weisen die Durchleitöffnungen radiale Bohrungen 61 auf, welche von der Basis des Extraktionsdorns nach innen führen. Weiter besitzt der Extraktionsdorn eine nach aussen - d.h. zur Rückseite - offene Höhlung 62 in welche die radialen Bohrungen münden. Dabei müssen die radialen Bohrungen nicht horizontal verlaufen, sondern können bspw. auch schräg nach aussen verlaufen, können also mit anderen Worten auch eine nicht-radiale Komponente aufweisen. Der Extraktionsdorn wird so in eine Aufnahme im Basiselement - insbesondere Basisplatte - eingesteckt, dass die radialen Bohrungen oberhalb der Aufnahme sind, bspw. gerade an der Basis des vom Basiselement weg ragenden Extraktionsdorn.

Viele weitere Ausgestaltungen sind denkbar.

## Patentansprüche

1. Perforationsvorrichtung (1) für Extraktionsgeräte zum Herstellen von Brühprodukten, aufweisend
- mindestens einen Perforationsdorn (3),
- wobei der Perforationsdorn eine umlaufende Mantelfläche (11, 12) aufweist, welche ein sich von einer Basis zu einer Spitze (5) hin verjüngendes Volumen umschliesst,
- **dadurch gekennzeichnet, dass** der Perforationsdorn mindestens eine von der Mantelfläche (11, 12) nach aussen vorstehende, axiale Rippe (20) aufweist.

2. Perforationsvorrichtung nach Anspruch 1, **dadurch gekennzeichnet, dass** das von der Mantelfläche eingeschlossene Volumen im Wesentlichen kegel- oder pyramidenförmig ist.

3. Perforationsvorrichtung nach Anspruch 1 oder 2, **dadurch gekennzeichnet, dass** sie als Extraktionsvorrichtung ausgerüstet ist und dass der mindestens eine Perforationsdorn (3) ein Extraktionsdorn ist.

4. Perforationsvorrichtung nach einem der vorangehenden Ansprüche, **gekennzeichnet durch** ein Basiselement (2), von welchem der Perforationsdorn (3) absteht, und **durch** mindestens eine Durchleitöffnung (8; 58; 61, 62) zum Durchleiten der Extraktionsflüssigkeit von einer Vorderseite des Basiselements zu einer Rückseite des Basiselements.

5. Perforationsvorrichtung nach Anspruch 4, **dadurch gekennzeichnet, dass** das Basiselement (2) eine Basisplatte ist.

6. Perforationsdorn nach Anspruch 4 oder 5, **dadurch gekennzeichnet, dass** das Basiselement (2) eine Anlagefläche für die Kapselwand (31) definiert, und dass die mindestens eine Durchleitöffnung (8; 58; 61, 62) im Bereich der axialen Rippe (20) ausgebildet ist.

7. Perforationsvorrichtung nach einem der Ansprüche 4-6, **dadurch gekennzeichnet, dass** beidseitig der Rippe (20) je eine Durchleitöffnung (8; 58; 61, 62) vorhanden ist.

8. Perforationsvorrichtung nach einem der vorangehenden Ansprüche, **dadurch gekennzeichnet, dass** der Perforationsdorn (3) eine Mehrzahl von Rippen (20) aufweist, deren Abstand, bezogen auf eine axiale Ausdehnung in der Mitte der Rippen gemessen, mindestens das doppelte von deren Höhe beträgt.

9. Perforationsvorrichtung nach einem der vorangehenden Ansprüche, **dadurch gekennzeichnet, dass** die Rippe (20) in einem axialen Abstand von der Spitze (5) endet.

10. Perforationsvoirichtung nach Anspruch 9, **dadurch gekennzeichnet, dass** die Rippe (20) einen Bereich (22) aufweist, welcher in Richtung zur Spitze (5) ausläuft.

11. Perforationsvorrichtung nach einem der vorangehenden Ansprüche, **dadurch gekennzeichnet, dass** die Rippe (20) sich bis zur Basisplatte erstreckt.

12. Perfbrationsvorrichtung nach einem der vorangehenden Ansprüche, **gekennzeichnet durch** eine Mehrzahl von Perforationsdornen (3) mit je mindestens einer Rippe (20).

13. Brühmodul, aufweisend eine Injektionsvorrichtung zum Einleiten einer Brühflüssigkeit in eine Portionskapsel mit einem Extraktionsgut oder Extrakt sowie eine Extraktionsvorrichtung zum Ausleiten eines Extraktionsprodukts aus der Portionskapsel, wobei die Extraktionsvorrichtung als Perforationsvorrichtung nach einem der vorangehenden Ansprüche ausgebildet ist.

14. Extraktionsgerät, beispielsweise Kaffeemaschine, zum portionenweisen Zubereiten eines Getränkes oder anderen Extraktionsprodukts aus einem in einer Portionskapsel verpackten Extraktionsgut oder Extrakt, aufweisend einen Flüssigkeitstank, eine Flüssigkeitspumpe, eine Flüssigkeitsheizungsvorrichtung sowie ein Brühmodul nach Anspruch 13, wobei durch die Injektionsvorrichtung des Brühmoduls von der Flüssigkeitspumpe geförderte, von durch die Flüssigkeitsheizungsvorrichtung erhitzte Flüssigkeit in eine Kapsel einspritzbar ist.
